# EUROPEAN PATENT APPLICATION

(11) **EP 3 836 719 A1**
(43) Date of publication of application: **16.06.2021**
(21) Application number: 18929281.6
(22) Date of filing: 09.08.2018
(51) Int. Cl.: H04W 74/08, H04W 72/04

(54) **USER DEVICE AND TRANSMISSION METHOD**

(71) Applicant: NTT DOCOMO, INC., Tokyo 100-6150 (JP)
(72) Inventor: OHARA, Tomoya, Tokyo 100-6150 (JP)
(74) Representative: Hoffmann Eitle
(86) International application number: PCT/JP2018/030002
(87) International publication number: WO 2020/031358

(57) **Abstract**

A user equipment includes a receiving unit configured to receive, from a base station, control information to be a trigger for starting a random access procedure, the control information including a SSB index specifying a synchronization signal block and a RACH occasion index specifying a relative position of a transmission resource for transmitting a random access preamble; a control unit configured to determine a position of the transmission resource for transmitting the random access preamble, based on a time until preparation for transmitting the random access preamble is completed after receiving the control information, the SSB index, and the RACH occasion index; and a transmitting unit configured to transmit the random access preamble at the position of the transmission resource determined by the control unit.

## Description

### TECHNICAL FIELD

The present invention relates to a user equipment and a transmission method in a radio communication system.

### BACKGROUND ART

In 3GPP (3rd Generation Partnership Project), in order to achieve a further increase in system capacity, a further increase in a data transmission rate, reduction of latency in a radio section, and the like, a radio communication method referred to as NR (New Radio) or 5G (for example, Non-Patent Document 1) has been studied. In NR, various radio technologies have been studied, in order to meet the requirements that latency in a radio section is reduced to be less than or equal to 1 ms, while achieving a throughput that is greater than or equal to 10 Gbps.

NR is assumed to use a wide range of frequencies ranging from a lower frequency band similar to that of LTE to a high frequency band that is higher than that of LTE. In particular, since a propagation loss increases in a high frequency band, in order to compensate for the increased propagation loss, it has been studied to apply beam forming with high beam gain. When transmitting a signal by applying beam forming, it is considered that a base station or user equipment determines a direction of a transmitting beam so that receiving quality is increased at a communication destination, by performing beam sweeping or the like.

### Related Art Document

### [Non-Patent Document]

Non-Patent Document 1: 3GPP TS 38.300 V15.0.0 (2017-12)
Non-Patent Document 2: 3GPP TS 38.213 V15.2.0 (2018-06)
Non-Patent Document 3: 3GPP TS 38.321 V15.2.0 (2018-06)

### SUMMARY OF THE INVENTION

### [PROBLEM TO BE SOLVED BY THE INVENTION]

It is assumed that a random access procedure similar to a random access procedure in LTE is also performed in NR. However, in considering the beam forming described above, user equipment may be unable to accurately determine a transmission position of a random access preamble.

In a radio communication system in which beam forming is performed, there is a need for a technique that allows a user equipment to accurately determine a transmission position of a random access preamble.

### [MEANS FOR SOLVING THE PROBLEM]

According to an aspect of the present invention, there is provided a user equipment including a receiving unit configured to receive, from a base station, control information to be a trigger for starting a random access procedure, the control information including a SSB index specifying a synchronization signal block and a RACH occasion index specifying a relative position of a transmission resource for transmitting a random access preamble; a control unit configured to determine a position of the transmission resource for transmitting the random access preamble, based on a time until preparation for transmitting the random access preamble is completed after receiving the control information, the SSB index, and the RACH occasion index; and a transmitting unit configured to transmit the random access preamble at the position of the transmission resource determined by the control unit.

### [ADVANTAGE OF THE INVENTION]

According to an embodiment of the present invention, in a radio communication system in which beam forming is performed, a technique is provided that allows a user equipment to accurately determine a transmission position of a random access preamble.

### BRIEF DESCRIPTION OF DRAWINGS

FIG. 1 is a diagram illustrating a configuration of a communication system according to an embodiment;
FIG. 2 is a diagram illustrating an example of a random access procedure;
FIG. 3 is a diagram illustrating a relationship between a beam and RACH;
FIG. 4 is a diagram illustrating an example of beam management;
FIG. 5 is a diagram illustrating an example in which a plurality of PRACH occasions are associated with a single SS/PRBCH index;
FIG. 6 is a diagram illustrating an example of a method of assigning a RACH occasion index;
FIG. 7 is a diagram illustrating transmission positions of a message 1 of example 1 to example 5;
FIG. 8 is a diagram illustrating an example of an association cycle;
FIG. 9 is a diagram illustrating an example of a sequence of an operation example;
FIG. 10 is a diagram illustrating an example of a functional configuration of a user equipment 10;
FIG. 11 is a diagram illustrating an example of a functional configuration of a base station 20; and FIG. 12 is a diagram illustrating an example of a hardware configuration of the user equipment 10 and the base station 20.

### [EMBODIMENTS OF THE INVENTION]

Hereinafter, embodiments of the present invention (the embodiments) are described with reference to the drawings. It should be noted that the embodiments described below are only one example, and embodiments to which the present invention is applied are not limited to the following embodiments.

Although the radio communication system in the following embodiments is assumed to be basically NR compliant, this is an example, and the radio communication system in the embodiments may conform, in part or in whole, to a radio communication system other than NR (e.g., LTE).

### (Overall system configuration)

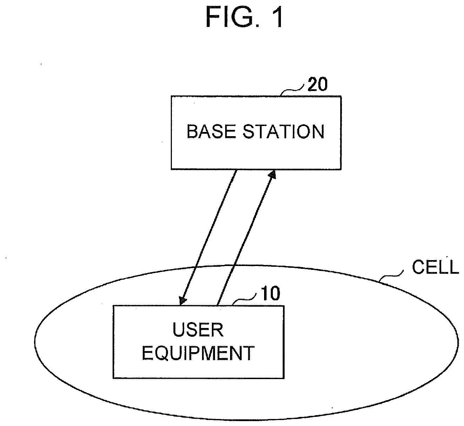

FIG. 1 is a configuration diagram of a radio communication system according to the embodiments. As illustrated in FIG. 1, the radio communication system according to the embodiments includes a user equipment 10 and a base station 20. In FIG. 1, one user equipment 10 and one base station 20 are illustrated; however, this is an example and there may be a plurality of each of the user equipment 10 and the base station 20.

The user equipment 10 is a communication apparatus having a radio communication function, such as a smartphone, a mobile phone, a tablet, a wearable terminal, a communication module for M2M (Machine-to-Machine), and is wirelessly connected to the base station 20, and uses various communication services provided by the radio communication system. The base station 20 is a communication apparatus that provides one or more cells, and that performs radio communication with the user equipment 10. Both the user equipment 10 and the base station 20 can perform beam forming to transmit and receive signals. Also, the user equipment 10 may be referred to as a UE and the base station 20 may be referred to as an eNB.

In the embodiments, a duplex method may be a TDD (Time Division Duplex) method or an FDD (Frequency Division Duplex) method.

Also, in the description of the embodiments, transmitting a signal using a beam is synonymous with transmitting a signal in which the precoding vector is multiplied (precoded with a precoding vector). Transmitting a signal using a beam may also be described as transmitting a signal at a particular antenna port. An antenna port is a logical antenna port defined in the 3GPP standard. The method of forming the beam is not limited to the method described above. For example, in a user equipment 10 including a plurality of antenna elements and a base station 20 including a plurality of antenna elements, a method for changing the angle of each antenna element may be used, a method of combining a method for using a precoding vector and a method for changing the angle of an antenna element may be used, or other methods may be used.

The technology according to the embodiments relate to random access of NR, beam forming, etc., and, therefore, an example of these operations in a radio communication system will be described first.

### (Random access procedure, etc.)

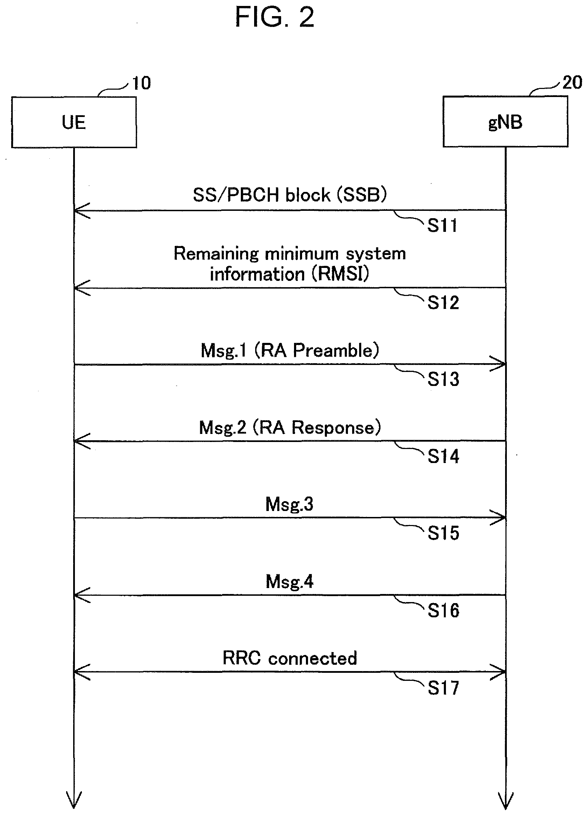

Referring to FIG. 2, an example of a random access procedure in the embodiments is described. The procedure shown in FIG. 2 may be referred to as initial access.

The base station 20 transmits an SS/PBCH block (also referred to as SSB) at a predetermined period, and the user equipment 10 receives the SS/PBCH block (S11). The SS/PBCH block includes a synchronization signal, a portion of the system information required for initial access (system frame number (SFN), information necessary to read the remaining system information, etc.). The user equipment 10 also receives an RMSI from the base station 20 (S12). RMSI includes, for example, information of SIB1 in LTE.

Subsequently, the user equipment 10 transmits a message 1 (Msg1 (=RA preamble)) (S13).

When the base station 20 detects the RA preamble, the base station 20 transmits a response Message2 (Msg2 (=RA response)) to the user equipment 10 (S13). In the following description, the term "Msg2" includes, unless otherwise specified, a PDCCH used for its scheduling and a PSDCH carrying the substantial information.

The user equipment 10 that receives the RA response transmits a Message3 (Msg3) including predetermined information to the base station 20 (S15). Message3 is, for example, an RRC connection request.

The base station 20 that receives Message3 transmits Message4 (Msg4, e.g., RRC connection setup) to the user equipment 10 (S16). When the user equipment 10 confirms that the predetermined information described above is included in the Message4, the user equipment 10 recognizes that the Message4 is the Message4 addressed to the user equipment 10 itself corresponding to the Message3 described above, completes the random access procedure, and establishes the RRC connection (S17). FIG. 2 illustrates an example in which Message3 and Message4 are transmitted, but this is only an example. The techniques of the embodiments can also be applied to a random access procedure in which Message3 and Message4 are not transmitted.

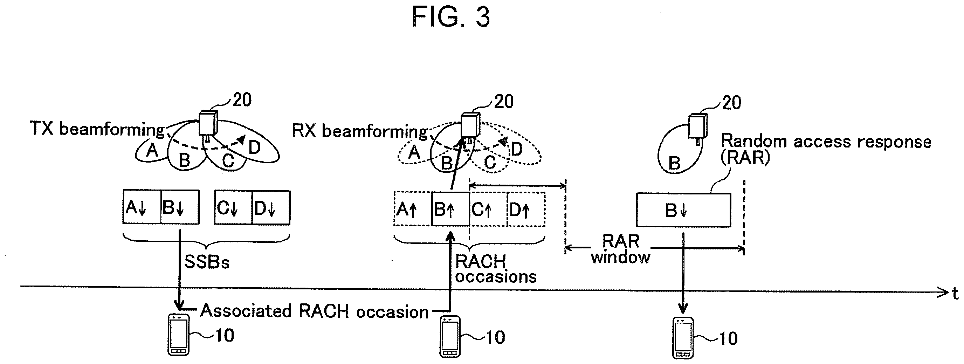

FIG. 3 is a diagram illustrating an example where a user equipment 10 selects a beam when a multibeam operation is performed. In the example of FIG. 3, the base station 20 transmits an SSB with each of the four transmit beams indicated by A, B, C, and D. For example, SSB-A is transmitted by beam A, SSB-B is transmitted by beam B, SSB-C is transmitted by beam C, and SSB-D is transmitted by beam D.

The user equipment 10 selects, for example, an SSB with highest received power and/or an SSB with a high SN ratio, and transmits a RA preamble with a resource B associated with an index of the SSB. The resource for transmitting the RA preamble may be referred to as a RACH occasion. Subsequently, for example, the base station 20 recognizes that the transmit beam B is selected as a transmit beam to the user equipment 10, by receiving the RA preamble at the resource B, and transmits the RA response, for example, using the transmit beam B. The relationship between the SSB (beam) and the RACH occasion is reported to the user equipment 10 in advance.

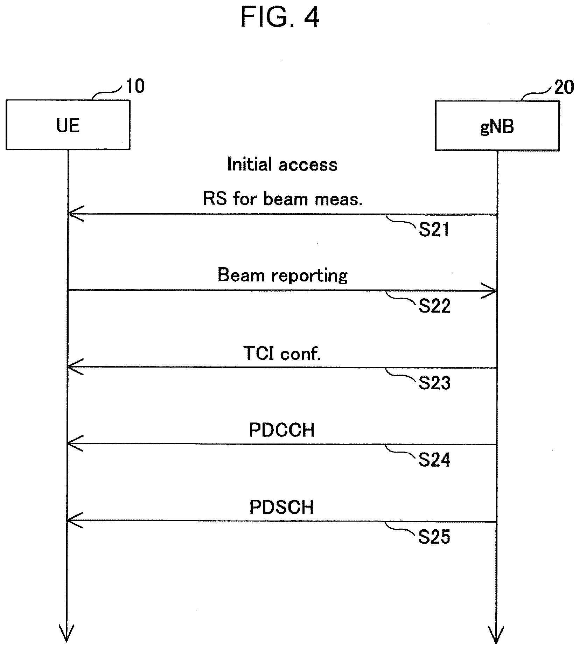

FIG. 4 illustrates an example of an operation related to beam management. As illustrated in FIG. 4, after initial access, the user equipment 10 measures each beam (S21) by receiving an RS (reference signal, e.g., CSI-RS) or an SSB transmitted from the base station 20 for each beam, and transmits, for example, an RS resource index (which may be an SSB index) and a measurement result (RSRP and/or RSRQ) to the base station 20 as a beam report (S22). Beam reporting may be performed for each received beam of the user equipment 10.

In S23, the base station 20 transmits configuration information of a TCI (Transmission Configuration Indication) to the user equipment 10. Such information includes, for example, information indicating the association between the SSB information and the antenna port of the DM-RS (QCL relationship). However, this is only one example.

By using the above-described information, the user equipment 10 can assume a transmit beam used by the base station 20 and receive (demodulate) a PDCCH and a PDSCH (S24, S25).

Here, QCL (Quasi Co-Location) is described. Antenna ports being QCL means that it is possible to assume that large-scale properties of a signal received by the user equipment 10 through one antenna port (or a radio channel corresponding to the antenna port) are, in whole or in part, the same as large-scale properties of a signal received by the user equipment 10 through another antenna port (or a radio channel corresponding to the antenna port). Here, the large-scale properties may include a Doppler spread and a Doppler shift associated with a frequency offset, an average delay and a delay spread associated with a timing offset and the like, and may also include average gain.

For example, if an SSB antenna port (or CSI-RS antenna port) has a QCL relationship with a PDCCH (a DM-RS antenna port), the user equipment 10 is able to perform reception while assuming that the SSB and the PDCCH are transmitted with a same downlink beam.

### (About PDCCH order)

In the embodiments, similar to a case of LTE, for example, if it is likely that UL synchronization of the user equipment 10 in a connected mode is lost, in order to establish uplink synchronization prior to DL transmission, a RACH is triggered by the base station 20 to the user equipment 10 with a PDCCH order.

At that time, for example, a preamble index (6 bits), a PRACH mask index (4 bits), and a SS block index (6 bits) are transmitted to the user equipment 10 using a DCI format. This information may be reported by RRC Signaling.

The user equipment 10 can execute a non-contention-based RACH procedure by transmitting a preamble of the specified preamble index. Also, if a preamble index (e.g., 000000) is specified, the user equipment 10 may be configured to execute a contention-based RACH procedure. That is, the user equipment 10 may randomly select a preamble index to be used from preamble indices for a contention-based RACH procedure. A PRACH mask index is information that indicates which RACH resource at one of the time resource positions is to be used, among the RACH resources specified by the RACH configuration index (in the RACH configuration table) (Non-Patent Document 3). In NR, the preamble index, PRACH mask index, DCI format, and the like described above may be reported in different bit sizes or in different forms.

A PRACH mask index specifies which RACH resource at one of the time resource positions is to be used, among the RACH resources specified by the RACH configuration index (in the RACH configuration table). It is possible to configure up to eight consecutive RACH occasions on a transmission resource associated with a single SS block. A RACH configuration index specifies a relative position of each RACH occasion in each SS block (a synchronization signal block) (the relative position of the transmission resource for transmitting the random access preamble).

For PRACH transmission triggered by a PDCCH order, if a value of the Random Access preamble index field is not zero, a PRACH mask index field indicates a PRACH occasion of the PRACH transmission. Here, a plurality of PRACH occasions is associated with one SS/PBCH index provided by an SS/PBCH index field of the PDCCH order.

Here, for a specified preamble index, ordering of multiple PRACH occasions is as follows.

First, frequency-multiplexed multiple PRACH occasions are ordered in accordance with ascending order of the frequency resource indices.

Second, time-multiplexed multiple PRACH occasions in a PRACH slot are ordered in accordance with ascending order of the time resource indices.

Third, the PRACH occasions are ordered in accordance with an ascending order of the indices of PRACH slots.

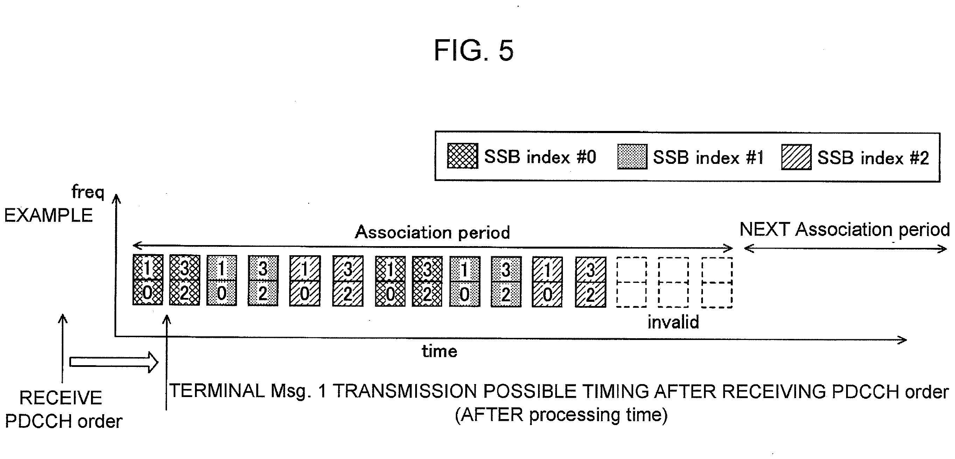

FIG. 5 illustrates an example of a plurality of PRACH occasions mapped to a single SS/PRBCH index. In FIG. 5, for example, by the above-described ordering, a plurality of PRACH occasions represented by RACH occasion indices 0, 1, 2, and 3 is associated with a transmission resource associated with a Synchronization Signal Block (SB) index #0, and a plurality of PRACH occasions represented by RACH occasion indices 0, 1, 2, and 3 are associated with a transmission resource associated with a Synchronization Signal Block (SSB) index #1, and a plurality of PRACH occasions represented by RACH occasion indices 0, 1, 2, and 3 are associated with a transmission resource associated with a Synchronization Signal Block (SSB) index #2. In this manner, by specifying the SSB index, one or more transmission resources in the time direction in the Association period illustrated in FIG. 5 are specified, and by further specifying the RACH occasion index, the time and frequency position (relative position) in each transmission resource among one or more transmission resources specified by the SSB index, is specified.

The association period illustrated in FIG. 5 is a period for the association between a plurality of PRACH occasions and SS/PBCH blocks. An association period may be defined, based on a RACH configuration period specified by a RACH configuration table, such that each of all transmitted SS/PBCH blocks is mapped to a RACH occasion at least once within the association period.

### (Problem)

For PRACH transmission triggered by a PDCCH order, it is unclear as to which time and frequency resources are to be used when transmitting a message 1, at a timing at which the user equipment 10 is enabled to transmit the message 1 (PRACH), and it is also unclear as to which RACH occasion index is to be used.

The PDCCH order specifies as to which RACH occasion index is to be used to transmit the message 1. However, as illustrated in FIG. 5, since RACH occasion indices are repeated, it is unclear which RACH occasion index of which timing is to be used.

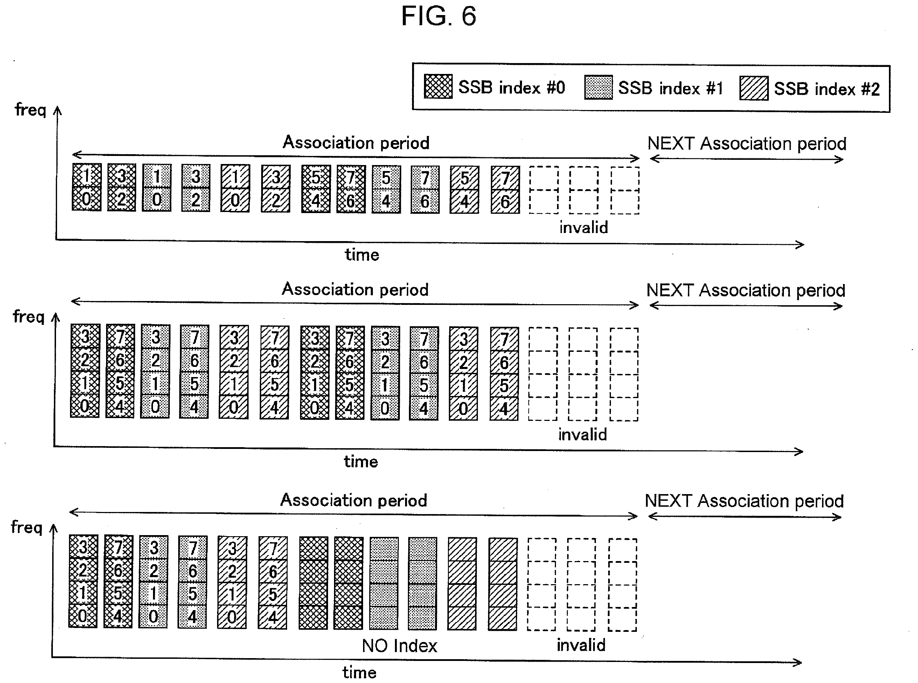

Also, as illustrated in FIG. 6, various allocation methods are conceivable for the allocation of the RACH occasion index, with respect to indexing, the number of RACH occasions, and the number of SSBs. Accordingly, even if a RACH occasion index is specified, it may not be clear which time and which frequency resources are to be used. For example, as illustrated in FIG. 6, for a plurality of discontinuous RACH occasions corresponding to the same SS/PBCH block in the association period, RACH occasion indices may be continuously allocated, or for the plurality of discontinuous RACH occasions, RACH occasion indices may be allocated by starting with a first RACH occasion index for each of the discontinuous RACH occasions. Furthermore, for example, after eight RACH occasion indices have been allocated to multiple RACH occasions corresponding to a same SS/PBCH block, a RACH occasion index may not be allocated, or the first RACH occasion index may be subsequently allocated. Also, for example, the position or number of time/frequency resources need not be limited to those illustrated in FIG. 6.

Here, the timing at which the user equipment 10 is able to transmit the message 1 may be, for example, the timing when the time elapses after the user equipment 10 receives the PDCCH order (after the instruction to perform the RACH has been received from the network) and the user equipment 10 prepares for transmission (the processing time on the user equipment side may be defined in the specification), for example, the timing at which the user equipment 10 has completed the preparation for transmission in an attempt to execute the transmission of the RA preamble. Furthermore, the timing at which the user equipment 10 is able to transmit the message 1 may also be a timing at which the user equipment 10 is ready to transmit the RA preamble in response to a report from the network, and need not be limited to the PDCCH order.

Here, the user equipment 10 may report, to the base station 20 in advance, the time required to prepare for transmission at the user equipment side.

As illustrated in FIG. 5, it is assumed that the SSB index and the RACH occasion index are allocated to the transmission resource.

A case where the RACH occasion index specified by the PDCCH order is 0 or 1 and the SSB index specified by the PDCCH order is #0, is considered. In this case, as illustrated in FIG. 5, the position where the RACH occasion index is 0 or 1 in the first transmission resource corresponding to SSB index #0, is before the timing when the user equipment 10 becomes capable of transmitting the message 1 after receiving the PDCCH order.

Accordingly, as an example 1, the message 1 (PRACH) may be transmitted at a position where the RACH occasion index is 0 or 1, in the transmission resource associated with the SSB index #0 of the second round in the first association period.

As described above, if the transmission position of the message 1 is set to the position of the transmission resource to which the specified RACH occasion index and the specified SSB index are assigned, immediately after the timing when the user equipment 10 has become capable of transmitting the message 1 after receiving the PDCCH order, it is possible to accurately specify the time and frequency resources used for transmitting the message 1 (PRACH), and it is possible to reduce the latency for transmitting the message 1 (PRACH).

In addition, as an example 2, the message 1 (PRACH) may be transmitted at a position where the RACH occasion index is 0 or 1 in the transmission resource whose SSB index is #0 at the beginning (first round) in the next association period illustrated in FIG. 5.

In this manner, the transmission position of the message 1 is set to the position of the transmission resource of the first round to which the specified RACH occasion index and the specified SSB index are assigned, in the next association period, so that the time and frequency resources used for transmitting the message 1 (PRACH) can be accurately specified.

Furthermore, it is assumed that the SSB index and the RACH occasion index are allocated to the transmission resource as illustrated in FIG. 5. In this case, a case where the RACH occasion index specified by the PDCCH order is 2 or 3 or the SSB index specified by the PDCCH order is #1 or 2, is considered.

In this case, as illustrated in FIG. 5, the position where the RACH occasion index is 2 or 3 in the first transmission resource corresponding to SSB index #0, is after the timing when the user equipment 10 becomes capable of transmitting the message 1 after receiving the PDCCH order. Furthermore, the position of the first transmission resource corresponding to SSB indices #1 and #2 is after the timing when the user equipment 10 becomes capable of transmitting the message 1 after receiving the PDCCH order.

Accordingly, as an example 3, the message 1 (PRACH) may be transmitted at the position of a transmission resource to which the corresponding SSB index and the corresponding RACH occasion index are assigned, where the transmission resource is of the first round in the first association period.

In this manner, the transmission position of the message 1 is set to the position of the transmission resource of the first round in the first association period, that is the transmission resource to which the corresponding SSB index and the corresponding RACH occasion index are assigned, so that the time and frequency resources used for transmitting the message 1 (PRACH) can be accurately specified, and the latency for transmitting the message 1 (PRACH) can be reduced.

In addition, as an example 4, the message 1 (PRACH) may be transmitted at the position of a transmission resource of the second round in the first association period, that is the transmission resource to which the corresponding SSB index and the corresponding RACH occasion index are assigned.

In this manner, the transmission position of the message 1 is set to the position of the transmission resource of the second round in the first association period, that is the transmission resource to which the corresponding SSB index and the corresponding RACH occasion index are assigned, so that the time and frequency resources used for transmitting the message 1 (PRACH) can be accurately specified.

Furthermore, as an example 5, the message 1 (PRACH) may be transmitted at the position of the first transmission resource (first round) in the next association period illustrated in FIG. 5 that is the transmission resource to which the corresponding SSB index and the corresponding RACH occasion index are assigned.

In this manner, the transmission position of the message 1 is set to the position of the first transmission resource (first round) in the next association period, that is the transmission resource to which the corresponding SSB index and the corresponding RACH occasion index are assigned, so that the time and frequency resources used for transmitting the message 1 (PRACH) can be accurately specified.

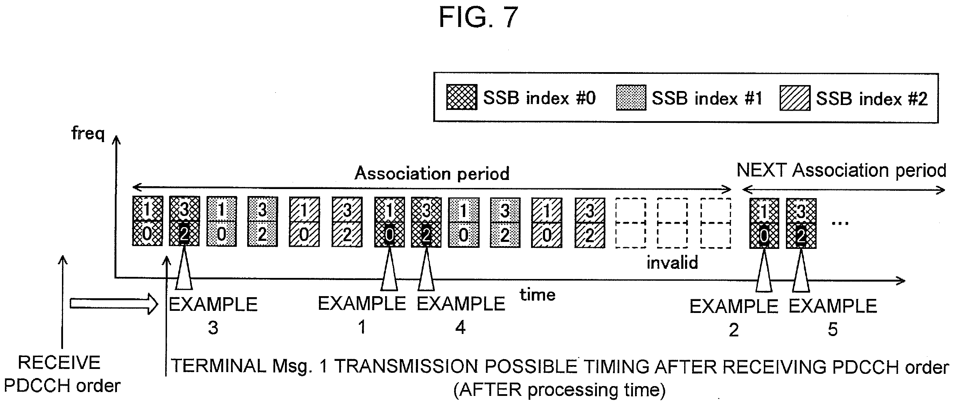

FIG. 7 is a diagram illustrating a transmission position of the message 1 of the examples 1 to 5.

The above-described examples 1-5 can be generalized as follows.

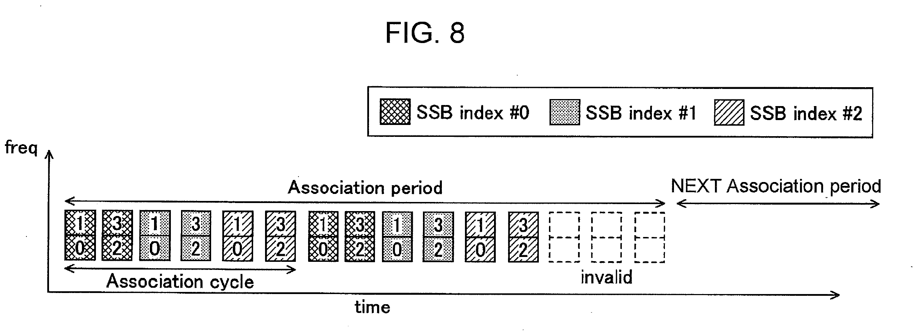

As illustrated in FIG. 8, one cycle of the transmission resources corresponding to SSB index #0, SSB index #1, and SSB index #2 in the association period, is assumed to be one association cycle.
(a) The transmission position of the message 1 is set to the timing after the receipt of the PDCCH order and after the user equipment is enabled to perform transmission, and the position of the earliest transmission resource among the transmission resources to which the corresponding SSB index and the corresponding RACH occasion index are assigned.
(b) The transmission position of the message 1 is set to the timing after the receipt of the PDCCH order and after the user equipment is enabled to perform transmission, and the position of the transmission resource to which the corresponding SSB index and the corresponding RACH occasion index are assigned, in the association cycle immediately after the association cycle including the timing when the user equipment is enabled to perform transmission.
(c) The transmission position of the message 1 is set to the timing after the receipt of the PDCCH order and after the user equipment is enabled to perform transmission, and the position of the first transmission resource among the transmission resources to which the corresponding SSB index and the corresponding RACH occasion index are assigned, in the association period immediately after the association period including the timing when the user equipment is enabled to perform transmission.

### (Operation example)

An example of an operation is to determine the transmission position of the message 1 and transmit the message 1 according to the method described in (a) above, after the user equipment receives the PDCCH order. As a prerequisite to the operation example, it is assumed that the user equipment 10 is in a connected mode, and the base station 20 has detected that the UL synchronization of the user equipment 10 may be lost.

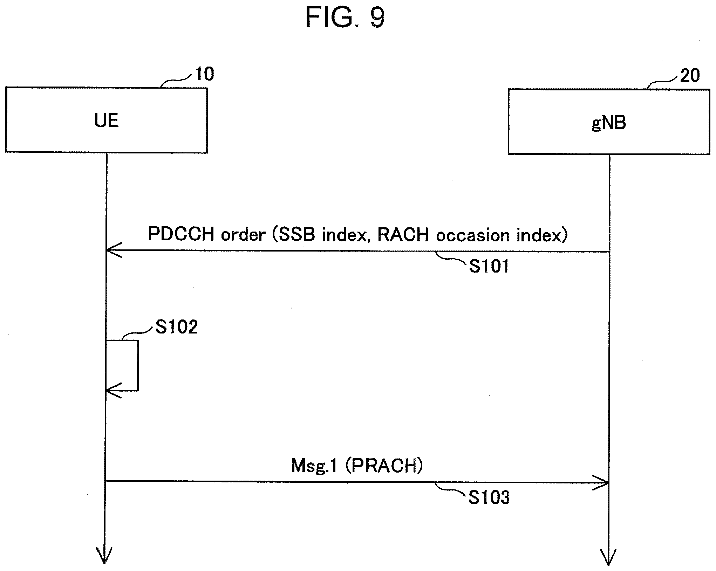

FIG. 9 illustrates an example of a sequence of an operation example. In S101, the base station 20 transmits a PDCCH order including an SSB index and a RACH occasion index to the user equipment 10.

In S102, the user equipment 10 determines, based on the SSB index and the RACH occasion index received in S101, the transmission position of the message 1 to be after the timing when the user equipment is enabled to perform transmission and at the position of the first transmission resource among the transmission resources to which the corresponding SSB index and the corresponding RACH occasion index are assigned.

In S103, the user equipment 10 transmits the message 1 at the transmission position of the message 1 determined in S102.

In this manner, the transmission position of the message 1 is set to a timing after the receipt of the PDCCH order and after the user equipment is enabled to perform transmission, and to the position of the first transmission resource among the transmission resources to which the corresponding SSB index and the corresponding RACH occasion index are assigned, so that the time and frequency resources used for transmitting the message 1 (PRACH) can be accurately specified, and the latency for transmitting the message 1 (PRACH) can be reduced. Thus, by accurately specifying the time and frequency resources used for transmitting the message 1, it is possible to prevent contentions in transmitting the message 1.

### (Device configuration)

Next, a functional configuration example of the user equipment 10 and the base station 20 that execute the process operations described above is described. The user equipment 10 and the base station 20 have all of the functions described in the embodiments. However, the user equipment 10 and the base station 20 may include only some of the functions described in the embodiments. The user equipment 10 and the base station 20 may be collectively referred to as a communication apparatus.

### <User equipment>

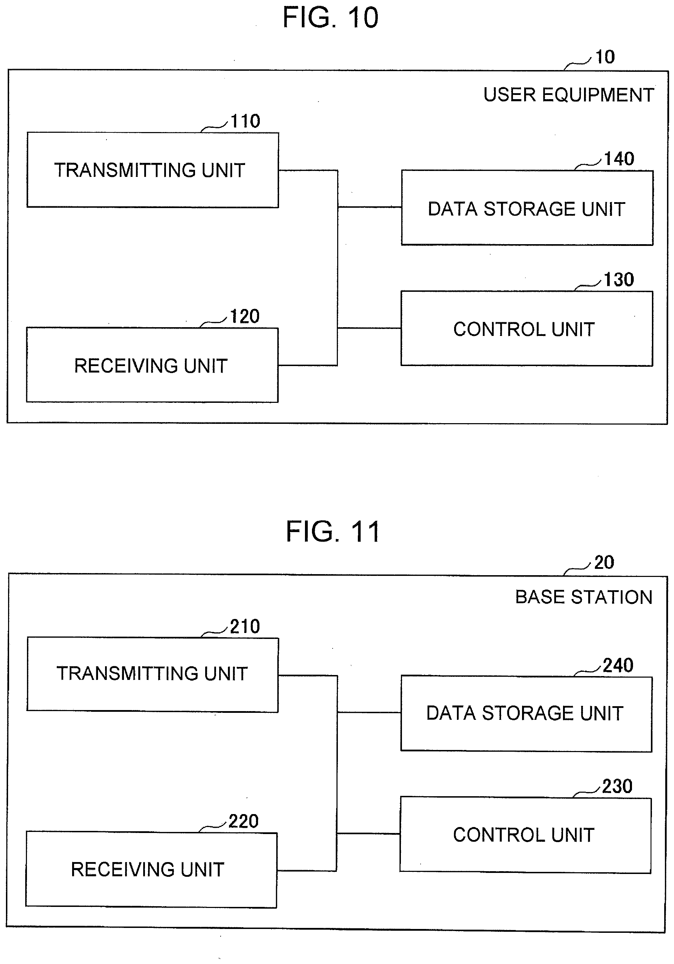

FIG. 10 is a diagram illustrating an example of a functional configuration of the user equipment 10. As illustrated in FIG. 10, the user equipment 10 includes a transmitting unit 110, a receiving unit 120, a control unit 130, and a data storage unit 140. The functional configuration illustrated in FIG. 10 is only one example. As long as the operations according to the embodiment of the present invention can be executed, the functional division and the name of the functional unit may be any functional division and name. Note that the transmitting unit 110 may be referred to as a transmitter, and the receiving unit 120 may be referred to as a receiver.

The transmitting unit 110 creates transmission signals from the transmission data and wirelessly transmits the transmission signals. The transmitting unit 110 may form one or more beams. The receiving unit 120 wirelessly receives a variety of signals and acquires a higher layer signal from the received physical layer signal. The receiving unit 120 includes a measuring unit that performs measurement of the received signal and acquires the received power, etc.

The control unit 130 controls the user equipment 10. The function of the control unit 130 related to the transmission may be included in the transmitting unit 110, and the function of the control unit 130 related to the reception may be included in the receiving unit 120. For example, the data storage unit 140 stores, for example, configuration information. The configuration information related to the transmission may be stored in the transmitting unit 110, and the configuration information related to the reception may be stored in the receiving unit 120.

For example, the receiving unit 120 is configured to receive the control information that triggers the start of the random access procedure from the base station 20, and to acquire a preamble index, a PRACH occasion index, a SS block index, or the like from the received control information, and the control unit 130 is configured to determine the transmission position of the message 1, based on the time until the user equipment 10 becomes capable of transmission after receiving the control information that triggers the start of the random access procedure from the base station 20, the PRACH occasion index, and the SS block index. The transmitting unit 110 is configured to transmit the message 1 at the determined transmission position of the message 1, based on control by the control unit 130.

For example, the control unit 130 may be configured to determine, as the transmission position of the message 1, the timing after the receipt of the PDCCH order and after the user equipment 10 is enabled to perform transmission, and the position of the first transmission resource among the transmission resources to which the corresponding SSB index and the corresponding RACH occasion index are assigned.

For example, the control unit 130 may be configured to determine, as the transmission position of the message 1, the timing after the receipt of the PDCCH order and after the user equipment is enabled to perform transmission, and the position of the transmission resource to which the corresponding SSB index and the corresponding RACH occasion index are assigned, in the association cycle immediately after the association cycle including the timing when the user equipment is enabled to perform transmission.

For example, the control unit 130 may be configured to determine, as the transmission position of the message 1, the timing after the receipt of the PDCCH order and after the user equipment is enabled to perform transmission, and the position of the first transmission resource among the transmission resources to which the corresponding SSB index and the corresponding RACH occasion index are assigned, in the association period immediately after the association period including the timing when the user equipment 10 is enabled to perform transmission.

### <Base station 20>

FIG. 11 is a diagram illustrating an example of a functional configuration of a base station 20. As illustrated in FIG. 11, the base station 20 includes a transmitting unit 210, a receiving unit 220, a control unit 230, and a data storage unit 240. The functional configuration illustrated in FIG. 11 is only one example. As long as the operations according to the embodiment of the present invention can be executed, the functional division and the name of the functional unit may be any functional division and name. The transmitting unit 210 may be referred to as a transmitter, and the receiving unit 220 may be referred to as a receiver.

The transmitting unit 210 includes a function of generating a signal to be transmitted to the user equipment 10 and wirelessly transmitting the signal. The transmitting unit 210 also forms one or more beams. The receiving unit 220 includes a function for receiving various signals transmitted from the user equipment 10 and acquiring information of a higher layer, for example, from the received signal. The receiving unit 220 includes a measuring unit that performs measurement of the received signal and acquires the received power, etc.

The control unit 230 controls the base station 20. The function of the control unit 230 related to the transmission may be included in the transmitting unit 210, and the function of the control unit 230 related to the reception may be included in the receiving unit 220. The data storage unit 240 stores, for example, the configuration information. The configuration information related to the transmission may be stored in the transmitting unit 210, and the configuration information related to the reception may be stored in the receiving unit 220.

### <Hardware configuration>

The block diagrams (FIGS. 10 and 11) used in the description of the above embodiment illustrate blocks of functional units. These functional blocks (constituent parts) are implemented by any combination of hardware and/or software. Furthermore, the means for implementing each functional block is not particularly limited. That is, the respective functional blocks may be implemented by a single device in which a plurality of elements are physically and/or logically combined; or two or more devices, which are physically and/or logically separated, may be directly and/or indirectly (for example, wired and/or wireless) connected, and the respective functional blocks may be implemented by these plural devices.

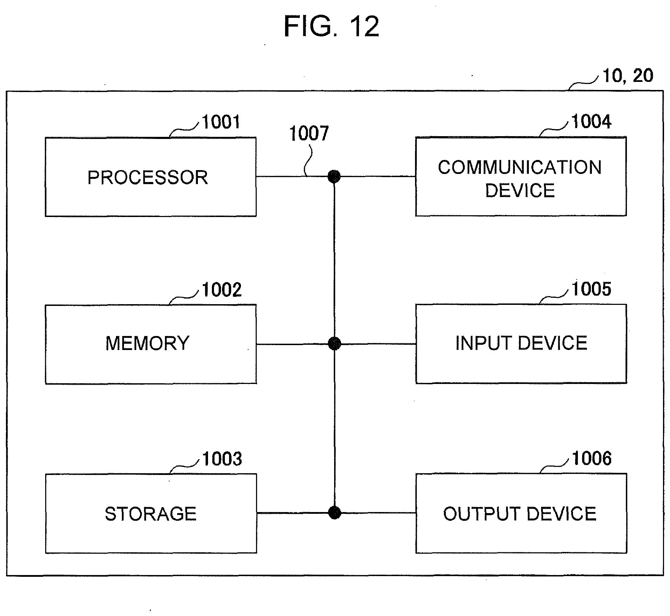

Furthermore, for example, both the user equipment 10 and the base station 20 according to one embodiment of the present invention may function as a computer that performs processes according to the embodiments. FIG. 12 is a diagram illustrating an example of a hardware configuration of the user equipment 10 and the base station 20 according to the embodiments. Each of the user equipment 10 and the base station 20 described above may be physically configured as a computer device including a processor 1001, a memory 1002, a storage 1003, a communication device 1004, an input device 1005, an output device 1006, and a bus 1007, etc.

Note that in the following description, the term "device" can be read as a circuit, a device, and a unit, etc. The hardware configuration of the user equipment 10 and the base station 20 may be configured to include one or a plurality of devices indicated by the reference numerals 1001 to 1006 illustrated in the drawing, or may be configured to not include some of the devices.

The respective functions of the user equipment 10 and the base station 20 are implemented by having predetermined software (programs) to be loaded in the hardware such as the processor 1001 and the memory 1002 so that the processor 1001 performs computation and controls the communication performed by the communication device 1004 and the reading and/or writing of data in the memory 1002 and the storage 1003.

The processor 1001, for example, operates the operating system to control the entire computer. The processor 1001 may be configured with a Central Processing Unit (CPU) including an interface with peripheral devices, a control device, an arithmetic device, and a register, etc.

Furthermore, the processor 1001 loads programs (program codes), software modules, or data from the storage 1003 and/or the communication device 1004 into the memory 1002, and executes various processes according to these elements. As the program, a program for causing a computer to execute at least part of the operation described in the above embodiment, is used. For example, the transmitting unit 110, the receiving unit 120, the control unit 130, and the data storage unit 140 of the user equipment 10 illustrated in FIG. 10 may be implemented by a control program that is stored in the memory 1002 and that operates on the processor 1001. Furthermore, for example, the transmitting unit 210, the receiving unit 220, the control unit 230, and the data storage unit 240 of the base station 20 illustrated in FIG. 11 may be implemented by a control program that is stored in the memory 1002 and that operates on the processor 1001. Although it has been described that the various processes described above are executed by a single processor 1001, the various processes described above may be executed simultaneously or sequentially by two or more processors 1001. The processor 1001 may be implemented by one or more chips. Note that the programs may be transmitted from the network via an electric communication line.

The memory 1002 is a computer-readable recording medium, and is configured with at least one of a ROM (Read-Only Memory), an EPROM (Erasable Programmable ROM), an EEPROM (Electrically Erasable Programmable ROM), and a RAM (Random Access Memory), for example. The memory 1002 may be referred to as a register, a cache, and a main memory (main memory), etc. The memory 1002 can store executable programs (program codes) and software modules, etc., for implementing the processes according to an embodiment of the present invention.

The storage 1003 is a computer-readable recording medium, and may be configured with at least one of, for example, an optical disk such as a CD-ROM (Compact Disc ROM), a hard disk drive, a flexible disk, a magneto-optical disk (for example, a compact disk, a digital versatile disk, a Blu-ray (Registered trademark) disk), a smart card, a flash memory (for example, a card, a stick, a key drive), a floppy (registered trademark) disk, and a magnetic strip, etc. The storage 1003 may be referred to as an auxiliary storage device. The above-described storage medium may be, for example, a database including the memory 1002 and/or the storage 1003, a server, or other appropriate media.

The communication device 1004 is hardware (transmission/reception device) for performing communication between computers via a wired and/or wireless network, and is also referred to as a network device, a network controller, a network card, and a communication module, etc., for example. For example, the transmitting unit 110 and the receiving unit 120 of the user equipment 10 may be implemented by the communication device 1004. Furthermore, the transmitting unit 210 and the receiving unit 220 of the base station 20 may be implemented by the communication device 1004.

The input device 1005 is an input device (for example, a keyboard, a mouse, a microphone, a switch, a button, and a sensor, etc.) that accepts input of information from the outside. The output device 1006 is an output device (for example, a display, a speaker, and an LED lamp, etc.) that outputs information to the outside. Note that the input device 1005 and the output device 1006 may be integrated (for example, a touch panel).

Furthermore, the respective devices such as the processor 1001 and the memory 1002 are connected by the bus 1007 for communicating information. The bus 1007 may be configured with a single bus or may be configured with different buses between the respective devices.

Furthermore, each of the user equipment 10 and the base station 20 may include hardware such as a microprocessor, a digital signal processor (DSP), an application specific integrated circuit (ASIC), a programmable logic device (PLD), and a field programmable gate array (FPGA), and some of or all of the functional blocks may be implemented by this hardware. For example, the processor 1001 may be implemented with at least one of these hardware elements.

### (Conclusion of the embodiments)

As described above, according to the embodiments of the present invention, there is provided a user equipment including a receiving unit configured to receive, from a base station, control information to be a trigger for starting a random access procedure, the control information including a SSB index specifying a synchronization signal block and a RACH occasion index specifying a relative position of a transmission resource for transmitting a random access preamble; a control unit configured to determine a position of the transmission resource for transmitting the random access preamble, based on a time until preparation for transmitting the random access preamble is completed after receiving the control information, the SSB index, and the RACH occasion index; and a transmitting unit configured to transmit the random access preamble at the position of the transmission resource determined by the control unit.

As described above, the position of the transmission resource for transmitting the random access preamble is determined based on a time until preparation for transmitting the random access preamble is completed after receiving the control information, the SSB index, and the RACH occasion index. Accordingly, the time and frequency resources used for transmitting the random access preamble can be accurately specified. In particular, it is possible to reduce the latency for transmitting a random access preamble by transmitting the random access preamble within a time interval of approximately one association period after preparation for transmission of a random access preamble is completed at the user equipment.

Further, when the control unit detects that a position specified by the RACH occasion index, in a transmission resource that is positioned first in terms of time and that is associated with the SSB index, is after the control information is received and before a timing when the time until completing the preparation for transmitting the random access preamble elapses, the control unit may determine, as the position of the transmission resource for transmitting the random access preamble, a position specified by the RACH occasion index in a transmission resource associated with the SSB index of a second round, in a period related to an association between the synchronization signal block and the relative position of the transmission resource for transmitting the random access preamble.

As described above, the transmission position of the random access preamble is determined to be a position of a transmission resource of the specified RACH occasion index and the specified SSB index, immediately after the timing when the user equipment becomes capable of transmitting the random access preamble. Therefore, the time and frequency resources used for transmitting the random access preamble can be accurately specified, and it is possible to reduce the latency for transmitting a random access preamble.

When the control unit detects that a position specified by the RACH occasion index, in a transmission resource that is positioned first in terms of time and that is associated with the SSB index, is after the control information is received and before a timing when the time until completing the preparation for transmitting the random access preamble elapses, the control unit may determine, as the position of the transmission resource for transmitting the random access preamble, a position specified by the RACH occasion index in a transmission resource associated with the SSB index of a first round, in a next period of a period related to an association between the synchronization signal block and the relative position of the transmission resource for transmitting the random access preamble.

As described above, the transmission position of the random access preamble is determined to be a position of a transmission resource of a first round in a next association period, to which the specified RACH occasion index and the specified SSB index are assigned. Therefore, the time and frequency resources used for transmitting the random access preamble can be accurately specified.

When the control unit detects that a position specified by the RACH occasion index, in a transmission resource that is positioned first in terms of time and that is associated with the SSB index, is after the control information is received and after a timing when the time until completing the preparation for transmitting the random access preamble elapses, or when the control unit detects that the position of the transmission resource that is positioned first in terms of time and that is associated with the SSB index, is after the control information is received and after the timing when the time until completing the preparation for transmitting the random access preamble elapses, the control unit may determine, as the position of the transmission resource for transmitting the random access preamble, a position of a transmission resource to which the SSB index and the RACH occasion index are assigned and that is of a first round in a period related to an association between the synchronization signal block and the relative position of the transmission resource for transmitting the random access preamble.

As described above, the transmission position of the random access preamble is determined to be a position of a transmission resource of a first round in the first association period, to which the corresponding SSB index and the corresponding RACH occasion index are assigned. Therefore, the time and frequency resources used for transmitting the random access preamble can be accurately specified, and it is possible to reduce the latency for transmitting a random access preamble.

When the control unit detects that a position specified by the RACH occasion index, in a transmission resource that is positioned first in terms of time and that is associated with the SSB index, is after the control information is received and after a timing when the time until completing the preparation for transmitting the random access preamble elapses, or when the control unit detects that the position of the transmission resource that is positioned first in terms of time and that is associated with the SSB index, is after the control information is received and after the timing when the time until completing the preparation for transmitting the random access preamble elapses, the control unit may determine, as the position of the transmission resource for transmitting the random access preamble, a position of a transmission resource to which the SSB index and the RACH occasion index are assigned and that is of a second round in a period related to an association between the synchronization signal block and the relative position of the transmission resource for transmitting the random access preamble.

As described above, the transmission position of the random access preamble is determined to be a position of a transmission resource of a second round in the first association period, to which the corresponding SSB index and the corresponding RACH occasion index are assigned. Accordingly, the time and frequency resources used for transmitting the random access preamble can be accurately specified.

When the control unit detects that a position specified by the RACH occasion index, in a transmission resource that is positioned first in terms of time and that is associated with the SSB index, is after the control information is received and after a timing when the time until completing the preparation for transmitting the random access preamble elapses, or when the control unit detects that the position of the transmission resource that is positioned first in terms of time and that is associated with the SSB index, is after the control information is received and after the timing when the time until completing the preparation for transmitting the random access preamble elapses, the control unit may determine, as the position of the transmission resource for transmitting the random access preamble, a position of a transmission resource to which the SSB index and the RACH occasion index are assigned and that is of a first round, in a next period of a period related to an association between the synchronization signal block and the relative position of the transmission resource for transmitting the random access preamble. As described above, the transmission position of the random access preamble is determined to be a position of a first (first round) transmission resource in the next association period, to which the corresponding SSB index and the corresponding RACH occasion index are assigned. Therefore, the time and frequency resources used for transmitting the random access preamble can be accurately specified.

Furthermore, according to the embodiments of the present invention, there is provided a method of transmitting a random access preamble, the transmission method including receiving, from a base station, control information to be a trigger for starting a random access procedure, the control information including a SSB index specifying a synchronization signal block and a RACH occasion index specifying a relative position of a transmission resource for transmitting the random access preamble; determining a position of the transmission resource for transmitting the random access preamble, based on a time until preparation for transmitting the random access preamble is completed after receiving the control information, the SSB index, and the RACH occasion index; and transmitting the random access preamble at the position of the transmission resource determined by the control unit. As described above, the position of the transmission resource for transmitting the random access preamble is determined based on a time until preparation for transmitting the random access preamble is completed after receiving the control information, the SSB index, and the RACH occasion index. Therefore, the time and frequency resources used for transmitting the random access preamble can be accurately specified. In particular, it is possible to reduce the latency for transmitting a random access preamble by transmitting the random access preamble within a time interval of approximately one association period after preparation for transmission of a random access preamble is completed at the user equipment.

### (Supplemental embodiment)

The exemplary embodiment of the present invention is described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for description, but the numerical values are merely examples, and certain suitable values may be used unless otherwise stated. The classification of items in the above description is not essential to the present invention, matters described in two or more items may be combined and used as necessary, and a matter described in one item may be applied to a matter described in another item (unless there is no contradiction). The boundary between functional units or processing units in a functional block diagram does not necessarily correspond to the boundary between physical parts. Operations of a plurality of functional units may be performed physically by one component, or an operation of one functional unit may be performed physically by a plurality of parts. In the processing procedures described in the embodiment, the order of processes may be changed as long as there is no inconsistency. For the sake of convenience of description, the user equipment 10 and the base station 20 have been described using the functional block diagrams, but such apparatuses may be implemented by hardware, software, or a combination thereof. Software executed by the processor included in the user equipment 10 according to the embodiment of the present invention, and the software executed by the processor of the base station 20 according to the embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The above embodiment indicates a method of identifying the position of the time frequency resource for transmitting a random access preamble based on the SSB index and the corresponding RACH occasion index, when the position of the time frequency resource is unable to be identified only by the SSB index and the corresponding RACH occasion index. However, even in cases where the preamble indices are divided into SSBs (cases where multiple SSBs are associated with a single RACH occasion), the method described above can be applied in the same manner as in the above embodiment, considering the time position of the resource.

The method described above is also applicable to contention free random access other than a PDCCH order, such as handover or the addition of PSCell.

The method described above is also applicable to cases of CSI-RS based random access, instead of SS block.

Furthermore, notification of information is not limited to the aspect/embodiment described in the present specification, and may be performed by other methods. For example, the notification of information may be performed by physical layer signaling (for example, DCI (Downlink Control Information), UCI (Uplink Control Information)), upper layer signaling (for example, RRC (Radio Resource Control) signaling, MAC (Medium Access Control) signaling, broadcast information (MIB (Master Information Block), SIB (System Information Block)), other signals, or a combination of these methods. Furthermore, the RRC signaling may be referred to as an RRC message, and may be, for example, an RRC Connection Setup message or an RRC Connection Reconfiguration message, etc.

Each aspect/embodiment described in the present specification may be applied to LTE (Long Term Evolution), LTE-A (LTE-Advanced), SUPER 3G, IMT-Advanced, 4G, 5G, FRA (Future Radio Access), W-CDMA (registered trademark), GSM, (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth(registered trademark), and a system using other appropriate systems and/or a next generation system expanded based on these systems.

In the processes, sequences, and flowcharts, etc., in each aspect/embodiment described in the present specification, the order of processes may be exchanged, as long as there is no inconsistency. For example, for the methods described in the present specification, elements of the various steps are presented in an exemplary order and are not limited to the presented specific order.

The specific operation that is performed by the base station 20 in the present specification may be performed by an upper node of the base station 20 in some cases. It is obvious that in a network including one or more network nodes including the base station 20, various operations performed for communication with the user equipment 10, may be performed by the base station 20 and/or a network node of other than the base station 20 (for example, MME or S-GW, etc., although not limited as such). In the above example, there is one network node other than the base station 20; however, a combination of a plurality of other network nodes (for example, MME and S-GW) may be used.

Each aspect/embodiment described in the present specification may be used singly or in combination, or may be switched in accordance with execution.

The user equipment 10 may be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

The base station 20 may be referred to, by those skilled in the art, as a NB (Node B), an eNB (enhanced Node B), a Base Station, gNB, or some other suitable term.

The terms "determining" and "deciding" used in the present specification may encompass a wide variety of operations. "Determining" and "deciding" may include the meaning of, for example, judging, calculating, calculating, computing, processing, deriving, investigating, looking up (for example, searching a table, a database, or another data structure), and ascertaining, etc. Furthermore, "determining" and "deciding" may include the meaning of receiving (for example, receiving information), transmitting (for example, transmitting information), inputting, outputting, and accessing (for example, accessing data in a memory). Furthermore, "determining" and "deciding" may include the meaning of resolving, selecting, choosing, establishing, and comparing, etc. In other words, "determining" and "deciding" include the meaning of "determining" and "deciding" some kind of operation.

The phrase "based on" used in the present specification does not mean "based only on", unless explicitly stated otherwise. In other words, the phrase "based on" means both "based only on" and "based on at least".

The terms "include", "including", and variations thereof used in the present specification or claims, are intended to be inclusive in a manner similar to the term "comprising". Furthermore, the term "or" used in the present specification or claims, is not intended to be exclusive OR.

In the entire present disclosure, if articles are added by translation, such as a, an, and the in English, for example, these articles may include a plural number of items/units, unless it is indicated that these articles are obviously not plural from the context.

Although the present invention is described in detail above, it will be obvious to those skilled in the art that the present invention is not limited to the embodiments described herein. The present invention can be implemented as modifications and variations without departing from the gist and scope of the present invention as defined by the scope of the claims. Therefore, the description of the present specification is for the purpose of illustration and does not have any restrictive meaning to the present invention.

### LIST OF REFERENCE SYMBOLS

10 user equipment
110 transmitting unit
120 receiving unit
130 control unit
140 data storage unit
20 base station
210 transmitting unit
220 receiving unit
230 control unit
240 data storage unit
1001 processor
1002 memory
1003 storage
1004 communication device
1005 input device
1006 output device

## Claims

1. A user equipment comprising:
a receiving unit configured to receive, from a base station, control information to be a trigger for starting a random access procedure, the control information including a SSB index specifying a synchronization signal block and a RACH occasion index specifying a relative position of a transmission resource for transmitting a random access preamble;
a control unit configured to determine a position of the transmission resource for transmitting the random access preamble, based on a time until preparation for transmitting the random access preamble is completed after receiving the control information, the SSB index, and the RACH occasion index; and
a transmitting unit configured to transmit the random access preamble at the position of the transmission resource determined by the control unit.

2. The user equipment according to claim 1, wherein
when the control unit detects that a position specified by the RACH occasion index, in a transmission resource that is positioned first in terms of time and that is associated with the SSB index, is after the control information is received and before a timing when the time until completing the preparation for transmitting the random access preamble elapses,
the control unit determines, as the position of the transmission resource for transmitting the random access preamble, a position specified by the RACH occasion index in a transmission resource associated with the SSB index of a second round, in a period related to an association between the synchronization signal block and the relative position of the transmission resource for transmitting the random access preamble.

3. The user equipment according to claim 1, wherein
when the control unit detects that a position specified by the RACH occasion index, in a transmission resource that is positioned first in terms of time and that is associated with the SSB index, is after the control information is received and before a timing when the time until completing the preparation for transmitting the random access preamble elapses,
the control unit determines, as the position of the transmission resource for transmitting the random access preamble, a position specified by the RACH occasion index in a transmission resource associated with the SSB index of a first round, in a next period of a period related to an association between the synchronization signal block and the relative position of the transmission resource for transmitting the random access preamble.

4. The user equipment according to claim 1, wherein
when the control unit detects that a position specified by the RACH occasion index, in a transmission resource that is positioned first in terms of time and that is associated with the SSB index, is after the control information is received and after a timing when the time until completing the preparation for transmitting the random access preamble elapses, or when the control unit detects that the position of the transmission resource that is positioned first in terms of time and that is associated with the SSB index, is after the control information is received and after the timing when the time until completing the preparation for transmitting the random access preamble elapses,
the control unit determines, as the position of the transmission resource for transmitting the random access preamble, a position of a transmission resource to which the SSB index and the RACH occasion index are assigned and that is of a first round in a period related to an association between the synchronization signal block and the relative position of the transmission resource for transmitting the random access preamble.

5. The user equipment according to claim 1, wherein
when the control unit detects that a position specified by the RACH occasion index, in a transmission resource that is positioned first in terms of time and that is associated with the SSB index, is after the control information is received and after a timing when the time until completing the preparation for transmitting the random access preamble elapses, or when the control unit detects that the position of the transmission resource that is positioned first in terms of time and that is associated with the SSB index, is after the control information is received and after the timing when the time until completing the preparation for transmitting the random access preamble elapses,
the control unit determines, as the position of the transmission resource for transmitting the random access preamble, a position of a transmission resource to which the SSB index and the RACH occasion index are assigned and that is of a second round in a period related to an association between the synchronization signal block and the relative position of the transmission resource for transmitting the random access preamble.

6. A method of transmitting a random access preamble, the method comprising:
receiving, from a base station, control information to be a trigger for starting a random access procedure, the control information including a SSB index specifying a synchronization signal block and a RACH occasion index specifying a relative position of a transmission resource for transmitting the random access preamble;
determining a position of the transmission resource for transmitting the random access preamble, based on a time until preparation for transmitting the random access preamble is completed after receiving the control information, the SSB index, and the RACH occasion index; and
transmitting the random access preamble at the position of the transmission resource determined by the control unit.
